# EUROPEAN PATENT SPECIFICATION

(11) **EP 1 366 344 B1**
(45) Date of publication and mention of the grant of the patent: **11.06.2008**
(21) Application number: 02717557.9
(22) Date of filing: 06.03.2002
(51) Int. Cl.: G01J 5/24, H04N 5/33

(54) **METHOD AND APPARATUS FOR THE READ-OUT OF A BOLOMETER ARRAY BY USING MULTIPLE BIAS PULSES**
VERFAHREN UND VORRICHTUNG ZUM AUSLESEN EINER BOLOMETERMATRIX MITTELS MEHRERER BIAS-PULSE
PROCEDE ET APPAREIL DE LECTURE D'UN RESEAU DE BOLOMETRES AU MOYEN DE PLUSIEURS IMPULSIONS POLARISEES

(30) Priority: 06.03.2001 US 800366
(43) Date of publication of application: 03.12.2003
(73) Proprietor: Honeywell International Inc., Morristown, NJ 07960 (US)
(72) Inventor: WOOD, Roland, A., Bloomington, MN 55420 (US)
(74) Representative: Haley, Stephen
(86) International application number: PCT/US2002/006835
(87) International publication number: WO 2002/071015

(56) References cited:
- WO-A-94/00950
- US-A- 5 258 619
- US-A- 5 489 776

## Description

### Field of the Invention

This invention relates generally to a microbolometer focal plane array, and more particularly pertains to an improved method and apparatus for microbolometer array operation.

### Background

Thermal infrared detectors are detectors which operate by sensing the heating effect of the infrared radiation. Thermal detectors generally do not need to be cooled below room temperature, which gives them an important practical advantage. Thermal infrared detectors that operate at room temperature have been known for 200 years, but recently the availability of integrated circuit and micromachining technology has greatly increased interest in this field. It is now practical to manufacture an array containing many thousands of thermal infrared detectors which operates well at room temperature.

A bolometer is a thermal radiation detector that operates by absorbing incident electromagnetic radiation (typically infrared radiation), converting the absorbed infrared energy into heat, then indicating the resulting temperature change in the detector by a change in its electrical resistance, which is a function of temperature. A microbolometer is a small bolometer, typically a few tens of microns in lateral size. Microbolometer infrared imaging systems are typically designed to be sensitive to long wave infrared, typically in a wavelength range of about 8-12 micrometers. A two-dimensional array of such microbolometers, typically 120x160, can detect variations in the amount of radiation emitted from objects within its field of view and can form two-dimensional images therefrom. Linear arrays of microbolometers may similarly be formed to form line images. In such arrays of microbolometers, it is necessary to measure the resistance of all of the individual microbolometers in the array without compromising the signal to noise ratio of the microbolometers. Because it is impractical to attach thousands of electrical wires to such an array to measure all the microbolometer electrical resistances in the array, microbolometer arrays are typically built on a monolithic silicon called a "read out integrated circuit" (ROIC) which is designed to measure all the individual microbolometer electrical resistances in the array in a short time, called the "frame time." The term "frame time" refers to a time in which a microbolometer array produces each complete picture or image of an object being viewed. The frame time is typically around 1/30^{th} of a second, but it can be faster or slower than the typical time of 1/30^{th} of a second. In order to allow the microbolometer array to respond adequately to time-dependent changes in the detected infrared radiation, the thermal response time of each microbolometer is typically adjusted, to be about the same value as the frame time. As a result, there remains the problem of how to efficiently measure the resistance of many thousands of microbolometers in the array (an array can have more than 80,000 microbolometers) within the size, power, and component restrictions placed on the ROIC, with the best possible signal to noise ratio.

A typical method used by the ROIC to measure the electrical resistance of all the microbolometers in the array is to apply a "bias pulse" of electrical voltage (or current) to each microbolometer in the array, and to measure a resulting signal current (or voltage). It is more common to apply a voltage bias pulse to each microbolometer in the array and to measure a resulting current signal from each microbolometer in the array during each frame time. However, in large arrays, it is usual to apply such bias pulses to more than one microbolometer simultaneously, and to measure the resulting signal currents simultaneously.

In the prior art, one single bias pulse is applied to each microbolometer in the array in each frame time. Application of a single bias pulse in each frame time can result in a temperature increase in the microbolometer over and above the heating effect of the incident radiation. Since, by necessity, such bias pulses have to be much shorter in time than the frame time, the heating effect is very rapid. Thus, when one bias pulse is applied to each microbolometer in the array in each frame time, the temperature of the microbolometer can initially rise rapidly for a short time equal to the bias pulse duration, and then fall for the reminder of the frame time. The variation in the signal level during each bias pulse due to the temperature rise and fall can typically be many times greater than the signals caused by the incident radiation. The electronic circuits receiving the signals must therefore be designed to possess a much larger dynamic range than would be required for the radiation signal alone. This adds to the difficulty in designing and operating such circuits.

Microbolometer arrays comprising biasing circuitry are described in United States Patent US 5489776 and International Patent Application WO 94/00950. A pulsed bias radiation detector is known from United States Patent US 5258619.

The minimum infrared signal that can be detected by a microbolometer is determined by the electrical noise present in the resulting current signal. The "noise equivalent power" (NEP) of a microbolometer is defined as the infrared radiation power change incident on a microbolometer that induces a signal current change equal to the "root mean square" (rms) current noise. Also, the "noise equivalent temperature difference" (NETD) is another term that is generally used in describing the performance of a microbolometer array. The NETD is defined as the temperature change at a target that produces a signal current change in the microbolometer equal to the rms current noise. In summary, the performance of the microbolometer array is generally measured in terms of the magnitudes of the NEP or NETD of the microbolometers used in the array. Generally, lower values of NEP and NETD correspond to a higher sensitivity and improved performance of the microbolometer array.

The existing method for obtaining higher sensitivity and improved performance in a microbolometer is to increase the magnitude of the bias pulse. However, higher bias pulse magnitudes produce correspondingly higher heating pulses and temperature variations in the microbolometer. This increase in heating pulse and temperature variation increases the dynamic range requirement of the circuits receiving the microbolometer signals.

Therefore, there is a need in the art to design and operate ROICs such that they operate at a significantly lower NEP and NETD values from a microbolometer array, to improve the sensitivity and performance of the microbolometer arrays. Also, there is a need in the art to reduce the microbolometer temperature variations within the frame time caused by the application of bias pulse heating effect.

### Summary of the Invention

The present invention provides a method and apparatus as cited in claims 1, 13 and 25.

Other aspects of the invention will be apparent on reading the following detailed description of the invention and viewing the drawings that form a part thereof.

### Brief Description of the Drawings

Figure 1 illustrates a microbolometer array in an imaging system.
Figure 2 illustrate a typical ROIC circuit.
Figure 3 illustrates a typical circuit including an integrator and an A/D converter used to convert an output signal to a digital signal value.
Figure 4 illustrates a prior-art method of operating each of the microbolometers in the array and their temperature variation.
Figure 5 illustrates one embodiment of operating each of the microbolometers in the array and its temperature variation according to the present invention.
Figure 6 shows a graph of calculated NEP versus level of applied input bias current pulses when scanning the array shown in Figure 1 using prior art technique.
Figure 7 shows a graph of calculated NEP versus level of applied input bias current pulses when scanning the array shown in Figure 1 according to the present invention.
Figure 8 illustrates a method of increasing performance and sensitivity of a microbolometer focal plane array.
Figure 9 illustrates major components of infrared radiation detector apparatus and their interconnections according to the present invention.

### Detailed Description

This document describes a system and method to electronically scan a microbolometer array to reduce NEP and increase performance and sensitivity of the array.

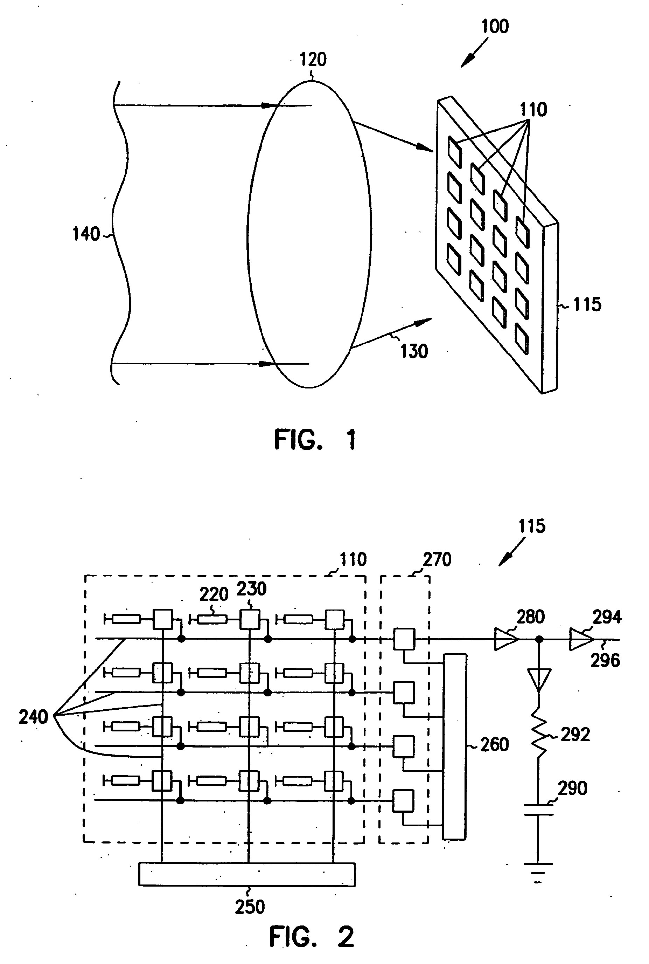

Figure 1 illustrates one embodiment of microbolometer array 110 in an imaging system 100. The imaging system 100 further includes an infrared-transmitting lens 120. The array 110 can be a one or two dimensional array. The array 110 is formed on a monolithic silicon called "read out integrated circuit" (ROIC) 115. In the embodiment shown in Figure 1, the array 110 is disposed in the focal plane of the infrared-transmitting lens 120, such that the rays of infrared radiation 130 are focused onto the focal plane to produce an image of a distant object or scene 140, in the same way that a photographic film produces an image when placed in the focal plane of a camera lens. The heating effect of the focused image causes temperature changes in individual microbolometers in the array 110. This temperature change in each of the microbolometers induces a change in resistance value in each of the microbolometers in the array 110. The ROIC 115 interrogates each microbolometer in the array 110 to measure the change in resistance in each of the microbolometers in the array 110. The change in resistance in each of the microbolometers in the array 110 is measured within a frame time. Generally, the frame time is approximately 1/30^{th} of a second. The thermal response time of each microbolometer in the array is generally tailored to be approximately equal to the frame time. The above-indicated measurement of the change in resistance in each of the microbolometers in the array 110 is repeated every frame time so that a realistic image of the scene and/or object 140 being viewed is displayed.

Figure 2 illustrates one embodiment of a ROIC 115 used in forming the microbolometer array 110. Each microbolometer in the array 110 is represented as an electrical resistor 220. Associated with each microbolometer 220 in the array 110 is a field-effect transistor (FET) 230. The microbolometers 220 and the FETs 230 are interconnected by thin-film metallic conductors 240. The ROIC 115 further includes column and row shift registers 250 and 260. The column shift register 250 applies control voltages to columns of the array 110, and the shift register 260 applies control voltages to a row multiplexer 270. A global bias voltage is applied to all the microbolometers in the array 110. The output signal line 280 of the array 110 is held at zero volts by an external connection. In operation, the ROIC 115 applies control voltages so that only one microbolometer has an applied bias voltage (VDDR) across it, and a signal current flows along the corresponding thin-film metallic conductor 240, through the multiplexer 270, and out to the output signal line 280. Additional current is supplied from a voltage source 290 via a resistor 292 to substantially bring the net output current 294 close to zero. The voltage source 290 can apply different bias voltages (as noted in U.S.Patent No. 4,752,694) to different microbolometers 220 in the array 110 during each time interval the microbolometers 220 are being biased, so that the output current remains close to zero even if the resistance of different microbolometers have slightly different resistance values, due to small fabrication variations between different microbolometers 220 in the array 110. The signal zeroing process called the "coarse non-uniformity correction," together with other methods and apparatus to correct for coarse non-uniformity are taught in U.S.Patent No. 4,752,694.

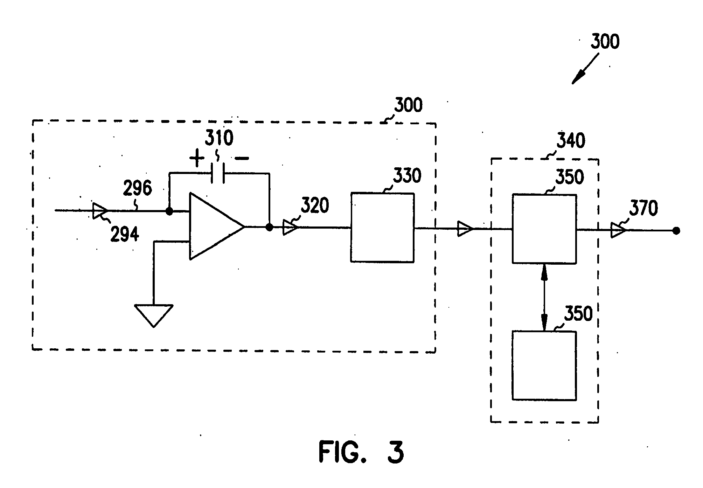

Figure 3 illustrates a typical circuit 300 including integrator and an A/D converter connected to the output line 296 of ROIC 115 to convert the output current 294 to a digital signal value. The output current 294 from the output line 296 of the ROIC 115 is converted to a signal charge 310 and to a signal voltage 320. The signal voltage 320 goes through an analog-to-digital (A/D) converter 330.

Then the signal from the A/D converter passes through a digital signal processor 340. The digital signal processor 340 comprises a digital memory 350, which holds correction values for each microbolometer in array 110, and a correction circuit 360. The correction circuit 360 corrects the final output using the correction values stored in the digital memory 350. The corrections are typically "fine offset corrections", which removes small zero-error signals. The corrections can also include "gain correction," which corrects for differing sensitivities between different microbolometers 220 in the array 110. The corrections can further include "dead pixel replacement," which is a replacement of signal from poorly operating microbolometers in the array 110 with signal values derived from neighboring microbolometers.

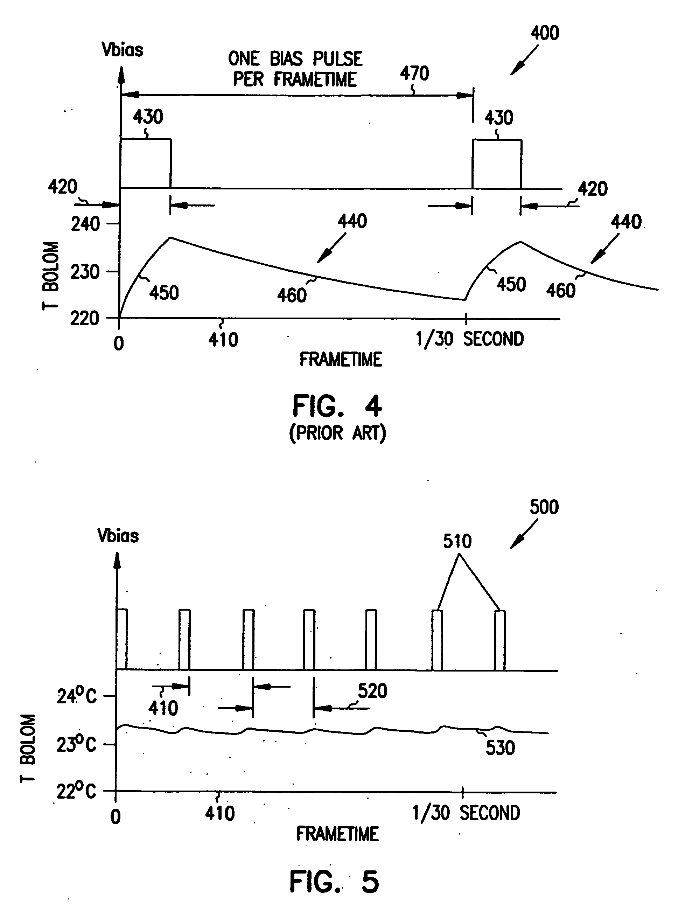

Figure 4 is a graph 400 illustrating a prior-art method of operating each of the microbolometers 220 in the array 110. As illustrated in Figure 4, the prior art method requires measuring microbolometer resistance values in the array 110 by dividing the frame time 410 into a number of time intervals 420 equal to the number of microbolometers 220 in the array 110, and applying a bias pulse to each of the microbolometers in the array within the computed equal time intervals 420. Thus, if the array 110 has an array size of 'R x C', and a frame time of 'T', then each bias pulse will have maximum time duration of (T/(R x C)). Therefore, each microbolometer in the array 110 is provided with one bias pulse 430 within the frame time 410. Alternatively, several microbolometers (N in number) in the array 110 could be simultaneously provided with one bias pulse in each frame time having a maximum time duration of ((T x N)/(R x C)).

Graph 400 also illustrates temperature variation 440 of each microbolometer caused by the application of the bias pulse 430. It can be seen from the graph 400 that the temperature variation 440 of each microbolometer in the array 110 is quite significant in each frame time 410. This is because the heating effect of each bias pulse 430 itself causes the temperature to rise rapidly in each microbolometer as shown in the graph 400. This temperature rise is over and above the heating effect of the incident infrared radiation 130. Since by necessity, as described above, the time duration of each bias pulse 430 is significantly shorter than the frame time 410, the heating effect of each bias pulse 430 is very rapid. Thus, when one bias pulse 430 is applied to each microbolometer in each frame time 410 as shown in Figure 4, the temperature of each microbolometer in the array 110 initially rises rapidly 450, for a short time equal to the time duration 420 of the bias pulse 430. Then the temperature starts to fall 460 during the remainder of the frame time 410 as shown in Figure 4. The variation of signal level caused by this temperature variation 440 is significantly greater than the signals generated by the incident infrared radiation 130. Therefore, the ROIC 115 receiving such varying signals must be designed to possess a much larger dynamic range than would be required for the signals generated by the incident infrared radiation 130 alone. The requirement of a large dynamic range by the ROIC 115 adds to the difficulty in designing and operating the ROICs.

Figure 5 is a graph 500 illustrating one embodiment of operating each of the microbolometers in the array according to the teachings of the present invention. Instead of a single bias pulse 430 applied in the prior art as shown in Figure 4, a series of two or more bias pulses 510 are applied substantially sequentially to each microbolometer in the array 110 within the frame time 410. The application of one or more bias pulses 510 to each of the microbolometers within the frame time 410 is to as "fast scanning." Again, assuming an array size of 'R x C', and a frame time of 'T', each microbolometer in the array 110 could receive two or more bias pulses 510 having a time duration not exceeding (T/(N x R x C)) within the frame time 410. Alternatively, several microbolometers could be simultaneously provided with two or more bias pulses 510.

Graph 500 also illustrates temperature variation in each microbolometer caused by the application of two or more bias pulses 510. It can be seen that the temperature variation of each microbolometer in the array 110 in each frame time 410 is significantly reduced by the fast scanning technique of the present invention (by applying a series of two or more bias pulses within the frame time 410). This is because the heating effect of each bias pulse is reduced by the number of bias pulses applied within the frame time. If there are 'N' bias pulses applied within the frame time, the heating variation effect is reduced by a factor of N. Also, due to the application of a series of two or more bias pulses 510, the time duration 520 between each bias pulse 510 is shorter than the time duration 470 between bias pulses shown in Figure 4. This shorter time duration 520 between two or more bias pulses 510 allows less time for cooling to occur, thereby keeping the temperature variation to a minimum 530 as shown in Figure 5. The reduced temperature variation allows the use of electronic circuits with higher performance. Another reason for the performance improvement provided by the fast scanning method 500 shown in Figure 5, relative to the prior art method of applying one bias pulse 430 to each microbolometer in the array in each frame time 410 shown in Figure 4, can be understood as follows: If the number of bias pulses N applied in each frame time to each microbolometer in the array 110, is greater than 1, and each is N times shorter in duration than the single bias pulse 430 that could be applied, then the noise bandwidth of the signals is increased to a higher frequency limit by a factor of N. Each signal therefore has N^{1/2} greater white noise, but there is no increase in the 1/f noise, since such low frequency noise is assumed to lie substantially within the noise bandwidth for all values of N. If the N signal values from each microbolometer in each frame time are used to form an average signal value, the rms white noise is reduced to the N=1 value, and the low frequency noise rms value for noise frequencies approximately between the frame repetition rate frequency and the bias pulse repetition frequency is approximately reduced by the factor of N^{1/2} below the N=1 value. Thus, the final signal value that is obtained in each frame time has a reduced amount of noise, if N>1. The reduced noise produces corresponding improvement factors in the array performance (reduced values of NEP and NETD).

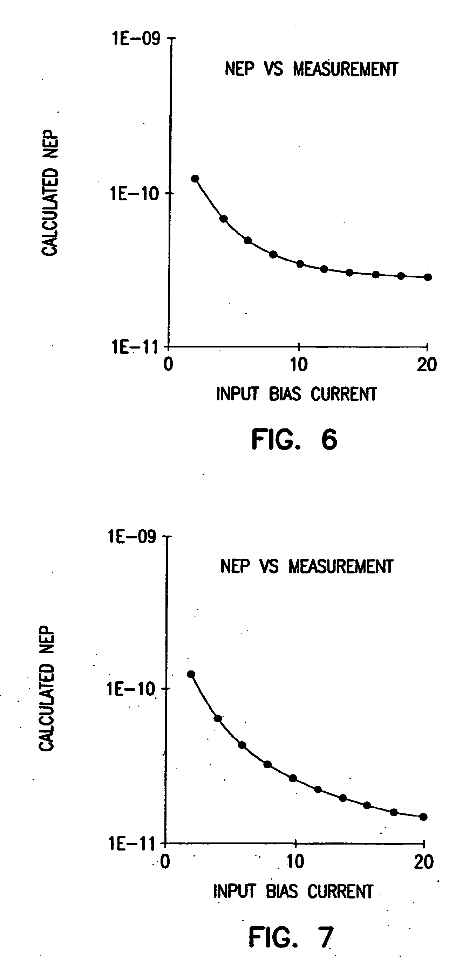

Figure 6 shows a graph of calculated NEP versus level of applied input bias current pulses when scanning the array 110 shown in Figure 1 using the prior art technique. Figure 7 shows a graph of calculated NEP versus level of applied input bias current pulses when scanning the array 100 shown in Figure 1 according to the present invention. All the parameters used in computing the NEP for the graphs shown in Figures 6 and 7 are kept constant during the scanning of the array 110 except for the application of bias current pulses. It can be seen from the two graphs in Figures 6 and 7, that the calculated NEP in Figure 7 is very much lower (with increasing input bias current) when compared with the calculated NEP in Figure 6. This is due to the application of one or more bias current pulses according to the present invention, which results in a reduction in noise in the ROIC. As described earlier, the reduced noise results in improved array performance.

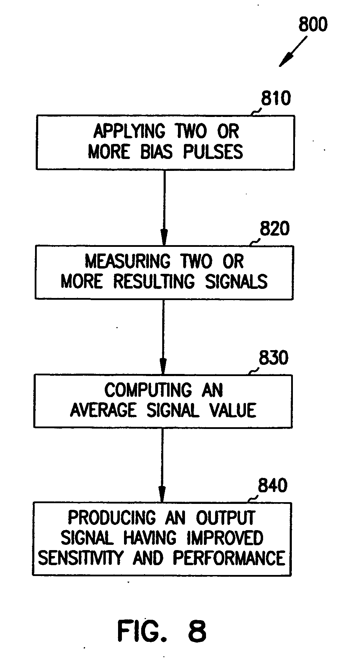

Figure 8 illustrates an overview of one embodiment of the process 800 of the present invention. As illustrated in element 810, this process applies two or more bias pulses substantially sequentially to each of the microbolometers in an array such that a resulting temperature in each of the microbolometers in the array due to the applying of the two or more bias pulses is uniform during a frame time. The frame time is the time it takes for the array to produce one complete image of an object being viewed by the array. The two or more bias pulses can be substantially equal in magnitude. The two or more bias pulses can also be substantially equally spaced in time. The two or more bias pulses can be voltage bias pulses or bias current signals. The number of the two or more bias pulses can be in the range of about 2 to 100 bias pulses. They can have time duration in the range of about 0.1 to 20 microseconds.

Element 820 measures two or more resulting signals corresponding to the two or more bias pulses applied to each of the microbolometers in the array during the frame time. Element 830 computes an average signal value from the measured two or more resulting signals corresponding to each of the microbolometers in the array during the frame time. Element 840 produces an output signal based on the computed average signal value for each of the microbolometers in the array during the frame time to improve performance, sensitivity, and facility of operation of an array including one or more microbolometers. The above elements are repeated during each frame time to produce a realistic image of an object being viewed using the array. Further, the process 800 can include converting the uniform output signal value associated with each of the microbolometers of the array to a digital signal value using an integrator and an A/D converter. Further, the process 800 can also include passing the digital signal value associated with each of the microbolometers in the array through a digital image processor to correct for image defects such as fine offsets, gain non-uniformity, or dead pixels or any other such correcting operations to enhance the image quality. In some embodiments, the process 800 further includes applying a corrective electrical signal to the output signal to correct for resistance non-uniformity between the one or more microbolometers in the array to obtain a uniform output signal value. Also, the process 800 can include applying the corrective electrical signal to the output signal to correct for fine offsets, gain non-uniformity, and/or dead pixels.

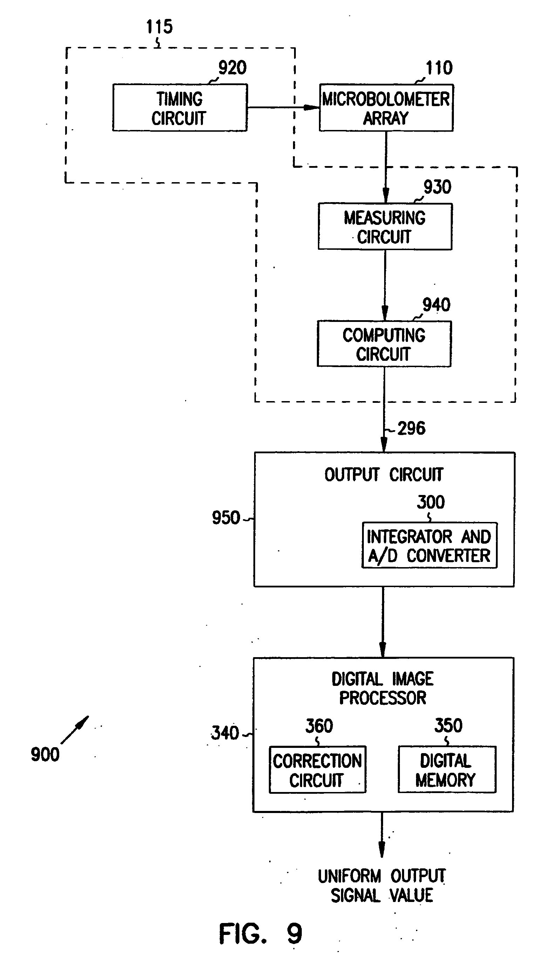

Figure 9 illustrates major portions of an infrared radiation detector apparatus 900 and their interconnections according to the present invention. The infrared radiation detector apparatus 900 includes the microbolometer array 110, ROIC 115, and an output circuit 950. The ROIC 115 includes a timing circuit 920, a measuring circuit 930, and a computing circuit 940.

The timing circuit 920 is coupled to the microbolometer array 110 such that the timing circuit 920 can apply two or more bias pulses substantially sequentially to each of the microbolometers in the array 110 such that the resulting temperature in each of the microbolometers in the array 110 due to the application of the two or more bias pulses 510 is uniform during a frame time 410. The frame time 410 is the time it takes for the microbolometer array 110 to produce a complete image of an object being viewed by the microbolometer array 110. The operation of the microbolometer array 110 has been described in detail with reference to Figures 1 and 2.

In some embodiments, the two or more bias pulses 510 are substantially equal in magnitude. The two or more bias pulses 510 can be substantially equally spaced in time within the frame time 410. The two or more bias pulses 510 can be voltage bias pulses. The two or more bias pulses 510 can be current signals. The number of the two or more bias pulses 510 can be approximately in the range of about 2 to 100 bias pulses. The two or more bias pulses 510 have a time duration of approximately in the range of about 0.1 to 20 microseconds.

The measuring circuit 930 is coupled to the microbolometer array 110 such that the measuring circuit 930 can measure two or more resulting signals associated with each of the two or more bias pulses 510 applied during the frame time 410. The computing circuit 940 is coupled to the measuring circuit 930 so that the computing circuit receives the two or more resulting signals from the measuring circuit 930 and computes an average signal value for each of the received two or more resulting signals from the measuring circuit 930. Then the output circuit 950 coupled to the computing circuit 940 produces an output signal based on the computed average signal value associated with each of the microbolometers in the array 110 such that the output signal improves performance, sensitivity, and facility of operation of the microbolometer array.

In some embodiments, the output circuit further includes an integrator and an A/D converter 300. The integrator and the A/D converter 300 receives the uniform output signal value associated with each microbolometer in the array 110 and converts the uniform output signal value to a digital signal value. The operation of the integrator and the A/D converter 300 has been discussed in detail with reference to Figure 3.

In some embodiments, the infrared radiation detector apparatus 900 further includes a digital image processor 340. The digital image processor 340 is coupled to the output circuit 950 to receive the digital signal value associated with each of the microbolometers in the array 110 and correct the received digital signal value for image defects such as fine offsets, gain non-uniformity, or dead pixels, and can further correct for any resistance non-uniformity in each microbolometer in the array (to obtain a uniform output signal value) using a correction circuit 360 to improve the image quality. The digital image processor 340 can further include digital memories 350 to store the correction values associated with each of the microbolometers in the array 110.

### Conclusion

The above-described method and apparatus provides, among other things, improved microbolometer array performance and sensitivity, as indicated, by lowering NEP and NETD. Also, the above method and apparatus produces a reduced microbolometer temperature variation in each of the microbolometers in the array.

The above description is intended to be illustrative, and not restrictive. Many other embodiments will be apparent to those skilled in the art. The scope of the invention should therefore be determined by the appended claims.

## Claims

1. A method for improving performance, sensitivity, and facility of operation of an array including microbolometers, comprising:
applying two or more bias pulses sequentially to each of the microbolometers in the array such that a resulting temperature in each of the microbolometers in the array due to the applying of the two or more bias pulses is uniform during a frame time wherein the frame time is the time it takes for the array to produce a complete image of an object being viewed by the array;
measuring two or more resulting signals corresponding to the bias pulses;
computing an average signal value from the resulting signals corresponding to each of the microbolometers in the array during the frame time; and
producing an output signal based on the computed average signal value for each of the microbolometers in the array during the frame time.

2. The method of claim 1, further comprising:
repeating the applying, measuring, computing, and producing steps to compute output signals during each frame time.

3. The method of claim 2, further comprising:
applying a corrective electrical signal to the output signal to correct for resistance non-uniformity between the one or more microbolometers in the array to obtain a uniform output signal value.

4. The method of claim 3, further comprising:
converting the uniform output signal value associated with each of the microbolometers in the array to a digital signal value.

5. The method of claim 4, further comprising:
passing the digital signal value associated with each of the microbolometers in the array through a digital image processor to correct for image defects.

6. The method of claim 5, wherein the image defects comprises:
fine offsets, gain non-uniformity, or dead pixels.

7. The method of claim 1, wherein the bias pulses are substantially equal in magnitude.

8. The method of claim 1, wherein the bias pulses are substantially equally spaced in time.

9. The method of claim 1, wherein the two or more bias pulses comprise:
two or more voltage bias pulses.

10. The method of claim 1, wherein the resulting signals comprise:
two or more bias current signals.

11. The method of claim 1, wherein the bias pulses are in the range of about 2 to 100 bias pulses.

12. The method of claim 1, wherein each of the two or more bias pulses has a time duration in the range of about 0.1 to 20 microseconds.

13. An infrared radiation detector apparatus, comprising:
microbolometers in an array;
a timing circuit coupled to the array to apply two or more bias pulses sequentially to each of the microbolometers in the array such that the resulting temperature in each of the microbolometers in the array due to the application of two or more bias pulses is uniform during a frame time wherein the frame time is the time it takes for the array to produce a complete image of an object being viewed by the array;
a measuring circuit coupled to the array to measure two or more resulting signals associated with each of the applied two or more bias pulses during the frame time;
a computing circuit coupled to the measuring circuit to compute an average signal value for each of the microbolometers in the array from the measured two or more resulting signals during the frame time; and
an output circuit coupled to the computing circuit to produce an output signal based on the computed average signal value for each of the microbolometers in the array during the frame time.

14. The apparatus of claim 13, wherein the output circuit further comprises:
an integrator and an A/D converter to convert the uniform output signal value to a digital signal value for each of the microbolometers in the array.

15. The apparatus of claim 14, further comprising:
a digital image processor, coupled to the output circuit to receive the digital signal value associated with each of the microbolometers of the array and correct the received digital signal value for image defects.

16. The apparatus of claim 15, wherein the digital image processor further comprises:
a correction circuit, to apply a corrective electrical signal based on a correction value to the output signal to correct for resistance non-uniformity in each of the microbolometers of the array to a obtain a uniform output signal value.

17. The apparatus of claim 16, wherein the correction circuit further corrects the uniform output signal value for fine offsets, gain non-uniformity, or dead pixels.

18. The apparatus of claim 17, wherein the digital image processor further comprises:
digital memories to store correction values for each of the microbolometers in the array.

19. The apparatus of claim 13, wherein the two or more bias pulses are substantially equal in magnitude.

20. The apparatus of claim 19, wherein the two or more pulses are substantially equally spaced in time.

21. The apparatus of claim 13, wherein the two or more bias pulses are voltage bias pulses.

22. The apparatus of claim 21, wherein the resulting signals are current signals.

23. The apparatus of claim 13, wherein the two or more bias pulses are in the range of about 2 to 100 bias pulses.

24. The apparatus of claim 23, wherein the two or more bias pulses have time duration in the range of about 0.1 to 20 microseconds.

25. A signal processing electronics circuit for an array including microbolometers, comprising:
a timing circuit coupled to the array to apply two or more bias pulses sequentially to each of the microbolometers in the array such that the resulting temperature in each of the microbolometers in the array due to the application of the bias pulses is uniform during a frame time wherein the frame time is the time it takes for the array to produce a complete image of an object being viewed by the array;
a measuring circuit coupled to the array to measure two or more resulting signals, respectively associated with each of the applied bias pulses during the frame time;
a computing circuit coupled to the measuring circuit to compute an average signal value for each of the microbolometers in the array from the measured resulting signals during the frame time; and
an output circuit coupled to the computing circuit to produce an output signal based on the computed average signal value for each of the microbolometers in the array during the frame time.

26. The circuit of claim 25, wherein the output circuit further comprises:
a correction circuit to apply a corrective electrical signal to the output signal to correct for resistance non-uniformity in each of the microbolometers of the array to a obtain a uniform output signal value.

27. The circuit of claim 26, wherein the output circuit further comprises:
an integrator and an A/D converter to convert the uniform output signal value to a digital signal value for each of the microbolometers in the array.

28. The circuit of claim 27, further comprising:
a digital image processor coupled to the output circuit to receive the digital signal value associated with each of the microbolometers of the array to correct for image defects such as fine offsets, gain non-uniformity or dead pixels.

29. The circuit of claim 28, wherein the digital image processor further comprises:
a correction circuit to apply a corrective electrical signal based on a correction value to the output signal to correct for any resistance non-uniformity in each of the microbolometers of the array to a obtain a uniform output signal value.

30. The circuit of claim 29, further comprising:
a memory to store the correction value associated with each microbolometer in the array.

31. The circuit of claim 25, wherein the two or more bias pulses are substantially equal in magnitude.

32. The circuit of claim 31, wherein the two or more pulses are substantially equally spaced in time.

33. The circuit of claim 25, wherein the two or more bias pulses are voltage bias pulses.

34. The circuit of claim 33, wherein the resulting signals are current signals.

35. The circuit of claim 25, wherein the two or more bias pulses are in the range of about 2 to 100 bias pulses.

36. The circuit of claim 35, wherein the two or more bias pulses have time duration in the range of about 0.1 to 20 microseconds.

## Patentansprüche

1. Verfahren zum Verbessern der Leistung, der Empfindlichkeit und der leichten Betätigung eines Mikrobolometer enthaltenden Arrays, umfassend:
Anlegen von zwei oder mehr Bias-Impulsen sequentiell an jedes der Mikrobolometer in dem Array, so daß eine resultierende Temperatur in jedem der Mikrobolometer in dem Array aufgrund des Anlegens der zwei oder mehr Bias-Impulse während einer Rahmenzeit gleichförmig ist, wobei die Rahmenzeit die Zeit ist, die das Array benötigt, um ein vollständiges Bild eines von dem Array betrachteten Objekts herzustellen;
Messen von zwei oder mehr resultierenden Signalen entsprechend den Bias-Impulsen;
Berechnen eines mittleren Signalwerts aus den resultierenden Signalen entsprechend jedem der Mikrobolometer in dem Array während der Rahmenzeit und
Erzeugen eines Ausgangssignals auf der Basis des berechneten mittleren Signalwerts für jedes der Mikrobolometer in dem Array während der Rahmenzeit.

2. Verfahren nach Anspruch 1, weiterhin umfassend:
Wiederholen der Schritte des Anlegens, des Messens, des Berechnens und des Herstellens, um Ausgangssignale während jeder Rahmenzeit zu berechnen.

3. Verfahren nach Anspruch 2, weiterhin umfassend:
Anwenden eines korrigierenden elektrischen Signals auf das Ausgangssignal, um eine Widerstandsungleichförmigkeit zwischen dem einen oder mehreren Mikrobolometern in dem Array zu korrigieren, um einen gleichförmigen Ausgangssignalwert zu erhalten.

4. Verfahren nach Anspruch 3, weiterhin umfassend:
Umwandeln des mit jedem der Mikrobolometer in dem Array assoziierten gleichförmigen Ausgangssignalwerts zu einem digitalen Signalwert.

5. Verfahren nach Anspruch 4, weiterhin umfassend:
Schicken des mit jedem der Mikrobolometer in dem Array assoziierten digitalen Signalwerts durch einen digitalen Bildprozessor, um Bilddefekte zu korrigieren.

6. Verfahren nach Anspruch 5, wobei die Bilddefekte folgendes umfassen:
feine Offsets, Verstärkungsungleichförmigkeit oder tote Pixel.

7. Verfahren nach Anspruch 1, wobei die Bias-Impulse von im wesentlichen gleicher Größe sind.

8. Verfahren nach Anspruch 1, wobei die Bias-Impulse zeitlich im wesentlichen gleichmäßig beabstandet sind.

9. Verfahren nach Anspruch 1, wobei die zwei oder mehr Bias-Impulse folgendes umfassen:
zwei oder mehr Spannungsbias-Impulse.

10. Verfahren nach Anspruch 1, wobei die resultierenden Signale folgendes umfassen:
zwei oder mehr Biasstromsignale.

11. Verfahren nach Anspruch 1, wobei die Bias-Impulse im Bereich von etwa 2 bis 100 Bias-Impulsen liegen.

12. Verfahren nach Anspruch 1, wobei jeder der zwei oder mehr Bias-Impulse eine Zeitdauer im Bereich von etwa 0,1 bis 20 Mikrosekunden aufweist.

13. Infrarotstrahlungsdetektorvorrichtung, umfassend:
Mikrobolometer in einem Array;
eine an das Array gekoppelte Zeitsteuerschaltung zum Anlegen von zwei oder mehr Bias-Impulsen sequentiell an jedes der Mikrobolometer in dem Array, so daß die resultierende Temperatur in jedem der Mikrobolometer in dem Array aufgrund des Anlegens von zwei oder mehr Bias-Impulsen während einer Rahmenzeit gleichförmig ist, wobei die Rahmenzeit die Zeit ist, die das Array benötigt, um ein vollständiges Bild eines von dem Array betrachteten Objekts herzustellen;
eine an das Array gekoppelte Meßschaltung zum Messen von zwei oder mehr, mit jedem der angelegten zwei oder mehr Bias-Impulse assoziierten resultierenden Signalen während der Rahmenzeit;
eine an die Meßschaltung gekoppelte Rechenschaltung zum Berechnen eines mittleren Signalwerts für jedes der Mikrobolometer in dem Array aus den gemessenen zwei oder mehr resultierenden Signalen während der Rahmenzeit und
eine an die Rechenschaltung gekoppelte Ausgangsschaltung zum Erzeugen eines Ausgangssignals auf der Basis des berechneten mittleren Signalwerts für jedes der Mikrobolometer in dem Array während der Rahmenzeit.

14. Vorrichtung nach Anspruch 13, wobei die Ausgangsschaltung weiterhin folgendes umfaßt:
einen Integrierer und einen A/D-Umsetzer zum Umsetzen des gleichförmigen Ausgangssignalwerts in einen digitalen Signalwert für jedes der Mikrobolometer in dem Array.

15. Vorrichtung nach Anspruch 14, weiterhin umfassend:
einen an die Ausgangsschaltung gekoppelten digitalen Bildprozessor zum Empfangen des mit jedem der Mikrobolometer in dem Array assoziierten digitalen Signalwerts und Korrigieren des empfangenen digitalen Signalwerts auf Bilddefekte.

16. Vorrichtung nach Anspruch 15, wobei der digitale Bildprozessor weiterhin folgendes umfaßt:
eine Korrekturschaltung zum Anwenden eines korrigierenden elektrischen Signals auf der Basis eines Korrekturwerts auf das Ausgangssignal zum Korrigieren einer Widerstandsungleichförmigkeit in jedem der Mikrobolometer des Arrays, um einen gleichförmigen Ausgangssignalwert zu erhalten.

17. Vorrichtung nach Anspruch 16, wobei die Korrekturschaltung weiterhin den gleichförmigen Ausgangssignalwert auf feine Offsets, Verstärkungsungleichförmigkeit oder tote Pixel korrigiert.

18. Vorrichtung nach Anspruch 17, wobei der digitale Bildprozessor weiterhin folgendes umfaßt:
digitale Speicher zum Speichern von Korrekturwerten für jedes der Mikrobolometer in dem Array.

19. Vorrichtung nach Anspruch 13, wobei die zwei oder mehr Bias-Impulse von im wesentlichen gleicher Größe sind.

20. Vorrichtung nach Anspruch 19, wobei die zwei oder mehr Impulse zeitlich im wesentlichen gleich beabstandet sind.

21. Vorrichtung nach Anspruch 13, wobei die zwei oder mehr Bias-Impulse Spannungsbias-Impulse sind.

22. Vorrichtung nach Anspruch 21, wobei die resultierenden Signale Stromsignale sind.

23. Vorrichtung nach Anspruch 13, wobei die zwei oder mehr Bias-Impulse im Bereich von etwa 2 bis 100 Bias-Impulsen liegen.

24. Vorrichtung nach Anspruch 23, wobei die zwei oder mehr Bias-Impulse eine Zeitdauer im Bereich von etwa 0,1 bis 20 Mikrosekunden aufweisen.

25. Signalverarbeitungselektronikschaltung für ein Mikrobolometer enthaltendes Array, umfassend:
eine an das Array gekoppelte Zeitsteuerschaltung zum Anlegen von zwei oder mehr Bias-Impulsen sequentiell an jedes der Mikrobolometer in dem Array, so daß die resultierende Temperatur in jedem der Mikrobolometer in dem Array aufgrund des Anlegens der Bias-Impulse während einer Rahmenzeit gleichförmig ist, wobei die Rahmenzeit die Zeit ist, die das Array benötigt, um ein vollständiges Bild eines von dem Array betrachteten Objekts herzustellen;
eine an das Array gekoppelte Meßschaltung zum Messen von zwei oder mehr, mit jedem der angelegten zwei oder mehr Bias-Impulse jeweils assoziierten resultierenden Signalen während der Rahmenzeit;
eine an die Meßschaltung gekoppelte Rechenschaltung zum Berechnen eines mittleren Signalwerts für jedes der Mikrobolometer in dem Array aus den gemessenen zwei oder mehr resultierenden Signalen während der Rahmenzeit und
eine an die Rechenschaltung gekoppelte Ausgangsschaltung zum Erzeugen eines Ausgangssignals auf der Basis des berechneten mittleren Signalwerts für jedes der Mikrobolometer in dem Array während der Rahmenzeit.

26. Schaltung nach Anspruch 25, wobei die Ausgangsschaltung weiterhin folgendes umfaßt:
eine Korrekturschaltung zum Anwenden eines korrigierenden elektrischen Signals auf das Ausgangssignal zum Korrigieren einer Widerstandsungleichförmigkeit in jedem der Mikrobolometer des Arrays, um einen gleichförmigen Ausgangssignalwert zu erhalten.

27. Schaltung nach Anspruch 26, wobei die Ausgangsschaltung weiterhin folgendes umfaßt:
einen Integrierer und einen A/D-Umsetzer zum Umsetzen des gleichförmigen Ausgangssignalwerts in einen digitalen Signalwert für jedes der Mikrobolometer in dem Array.

28. Schaltung nach Anspruch 27, weiterhin umfassend:
einen an die Ausgangsschaltung gekoppelten digitalen Bildprozessor zum Empfangen des mit jedem der Mikrobolometer in dem Array assoziierten digitalen Signalwerts, um Bilddefekte wie etwa feine Offsets, Verstärkungsungleichförmigkeit oder tote Pixel zu korrigieren.

29. Schaltung nach Anspruch 28, wobei der digitale Bildprozessor weiterhin folgendes umfaßt:
eine Korrekturschaltung zum Anwenden eines korrigierenden elektrischen Signals auf der Basis eines Korrekturwerts auf das Ausgangssignal zum Korrigieren einer Widerstandsungleichförmigkeit in jedem der Mikrobolometer des Arrays, um einen gleichförmigen Ausgangssignalwert zu erhalten.

30. Schaltung nach Anspruch 29, weiterhin umfassend:
einen Speicher zum Speichern des mit jedem Mikrobolometer in dem Array assoziierten Korrekturwerts.

31. Schaltung nach Anspruch 25, wobei die zwei oder mehr Bias-Impulse von im wesentlichen gleicher Größe sind.

32. Schaltung nach Anspruch 31, wobei die zwei oder mehr Impulse zeitlich im wesentlichen gleich beabstandet sind.

33. Schaltung nach Anspruch 25, wobei die zwei oder mehr Bias-Impulse Spannungsbias-Impulse sind.

34. Schaltung nach Anspruch 33, wobei die resultierenden Signale Stromsignale sind.

35. Schaltung nach Anspruch 25, wobei die zwei oder mehr Bias-Impulse im Bereich von etwa 2 bis 100 Bias-Impulsen liegen.

36. Schaltung nach Anspruch 35, wobei die zwei oder mehr Bias-Impulse eine Zeitdauer im Bereich von etwa 0,1 bis 20 Mikrosekunden aufweisen.

## Revendications

1. Procédé pour améliorer les performances, la sensibilité et la facilité d'exploitation d'une matrice comportant des microbolomètres, comprenant :
l'application séquentielle de deux impulsions de polarisation ou plus à chacun des microbolomètres de la matrice de telle sorte que dans chacun des microbolomètres de la matrice, une température résultante due à l'application des deux impulsions de polarisation ou plus soit uniforme pendant la durée d'une trame, la durée d'une trame étant la durée nécessaire pour que la matrice produise une image complète d'un objet visionné par la matrice ;
la mesure de deux signaux résultants ou plus correspondant aux impulsions de polarisation ;
le calcul d'une valeur moyenne de signal à partir des signaux résultants correspondant à chacun des microbolomètres de la matrice pendant la durée de la trame ; et
la production d'un signal de sortie basé sur la valeur moyenne calculée de signal pour chacun des microbolomètres de la matrice pendant la durée de la trame.

2. Procédé de la revendication 1 comprenant de plus :
la répétition de l'application, de la mesure, du calcul et de la production des étapes pour le calcul des signaux de sortie pendant chaque durée de trame.

3. Procédé de la revendication 2 comprenant de plus :
l'application d'un signal électrique de correction au signal de sortie pour corriger la non uniformité de la résistance entre un ou plusieurs microbolomètres de la matrice pour obtenir une valeur uniforme du signal de sortie.

4. Procédé de la revendication 3 comprenant de plus :
la conversion de la valeur uniforme du signal de sortie associée à chacun des microbolomètres de la matrice en une valeur numérique du signal.

5. Procédé de la revendication 4 comprenant de plus :
le passage de la valeur numérique du signal associée à chacun des microbolomètres de la matrice à travers un processeur numérique d'image pour corriger les défauts de l'image.

6. Procédé de la revendication 5, dans lequel les défauts de l'image comprennent :
de légers décalages, un gain non uniforme, ou des pixels morts.

7. Procédé de la revendication 1, dans lequel les impulsions de polarisation sont de magnitude sensiblement égale.

8. Procédé de la revendication 1, dans lequel les impulsions de polarisation sont espacées dans le temps de manière sensiblement égale.

9. Procédé de la revendication 1, dans lequel les deux impulsions de polarisation ou plus comprennent :
deux impulsions de tension de polarisation ou plus.

10. Procédé de la revendication 1, dans lequel les signaux résultants comprennent :
deux signaux de courant de polarisation ou plus.

11. Procédé de la revendication 1, dans lequel les impulsions de polarisation se situent dans la plage d'environ 2 à 100 impulsions de polarisation.

12. Procédé de la revendication 1, dans lequel chacune des deux impulsions de polarisation ou plus a une durée dans la plage d'environ 0,1 à 20 microsecondes.

13. Appareil détecteur de rayonnement infrarouge comprenant :
des microbolomètres dans une matrice ;
un circuit d'horloge accouplé à la matrice pour appliquer séquentiellement deux impulsions de polarisation ou plus à chacun des microbolomètres de la matrice de telle sorte que dans chacun des microbolomètres de la matrice, la température résultante due à l'application de deux impulsions de polarisation ou plus soit uniforme pendant la durée d'une trame, la durée d'une trame étant la durée nécessaire pour que la matrice produise une image complète d'un objet visionné par la matrice ;
un circuit de mesure accouplé à la matrice pour mesurer deux signaux résultants ou plus associés à chacune des deux impulsions de polarisation ou plus appliquées pendant la durée de la trame ;
un circuit de calcul accouplé au circuit de mesure pour calculer une valeur moyenne de signal pour chacun des microbolomètres de la matrice à partir des deux signaux résultants ou plus mesurés pendant la durée de la trame ; et
un circuit de sortie accouplé au circuit de calcul pour produire un signal de sortie basé sur la valeur moyenne calculée de signal pour chacun des microbolomètres de la matrice pendant la durée de la trame.

14. Appareil de la revendication 13, dans lequel le circuit de sortie comprend de plus :
un intégrateur et un convertisseur A/N pour convertir la valeur uniforme du signal de sortie en une valeur numérique du signal pour chacun des microbolomètres de la matrice.

15. Appareil de la revendication 14, comprenant de plus :
un processeur numérique d'image, accouplé au circuit de sortie pour recevoir la valeur numérique du signal associée à chacun des microbolomètres de la matrice et pour corriger la valeur numérique du signal reçu des défauts de l'image.

16. Appareil de la revendication 15, dans lequel le processeur numérique d'image comprend de plus :
un circuit de correction pour appliquer au signal de sortie, un signal électrique de correction basé sur une valeur de correction pour corriger la non uniformité de la résistance dans chacun des microbolomètres de la matrice pour obtenir une valeur uniforme du signal de sortie.

17. Appareil de la revendication 16, dans lequel le circuit de correction corrige de plus la valeur uniforme du signal de sortie des légers décalages, du gain non uniforme, ou des pixels morts.

18. Appareil de la revendication 17, dans lequel le processeur numérique d'image comprend de plus :
des mémoires numériques pour stocker les valeurs de correction pour chacun des microbolomètres de la matrice.

19. Appareil de la revendication 13, dans lequel les deux impulsions de polarisation ou plus sont de magnitude sensiblement égale.

20. Appareil de la revendication 19, dans lequel les deux impulsions ou plus sont espacés dans le temps de manière sensiblement égale.

21. Appareil de la revendication 13, dans lequel les deux impulsions de polarisation ou plus sont des impulsions de tension de polarisation.

22. Appareil de la revendication 21, dans lequel les signaux résultants sont des signaux de courant.

23. Appareil de la revendication 13, dans lequel les deux impulsions de polarisation ou plus se situent dans la plage d'environ 2 à 100 impulsions de polarisation.

24. Appareil de la revendication 23, dans lequel les deux impulsions de polarisation ou plus ont une durée dans la plage d'environ 0,1 à 20 microsecondes.

25. Circuit électronique de traitement de signal pour une matrice comportant des microbolomètres comprenant :
un circuit d'horloge accouplé à la matrice pour appliquer séquentiellement deux impulsions de polarisation ou plus à chacun des microbolomètres de la matrice de telle sorte que dans chacun des microbolomètres de la matrice, la température résultante due à l'application des impulsions de polarisation soit uniforme pendant la durée d'une trame, la durée d'une trame étant la durée nécessaire pour que la matrice produise une image complète d'un objet visionné par la matrice ;
un circuit de mesure accouplé à la matrice pour mesurer deux signaux résultants ou plus associés respectivement à chacune des impulsions de polarisation appliquées pendant la durée de la trame ;
un circuit de calcul accouplé au circuit de mesure pour calculer une valeur moyenne de signal pour chacun des microbolomètres de la matrice à partir des signaux résultants mesurés pendant la durée de la trame ; et
un circuit de sortie accouplé au circuit de calcul pour produire un signal de sortie basé sur la valeur moyenne calculée de signal pour chacun des microbolomètres de la matrice pendant la durée de la trame.

26. Circuit de la revendication 25, dans lequel le circuit de sortie comprend de plus :
un circuit de correction pour appliquer au signal de sortie, un signal électrique de correction pour corriger la non uniformité de la résistance dans chacun des microbolomètres de la matrice pour obtenir une valeur uniforme du signal de sortie.

27. Circuit de la revendication 26, dans lequel le circuit de sortie comprend de plus :
un intégrateur et un convertisseur A/N pour convertir la valeur uniforme du signal de sortie en une valeur numérique du signal pour chacun des microbolomètres de la matrice.

28. Circuit de la revendication 27, comprenant de plus :
un processeur numérique d'image accouplé au circuit de sortie pour recevoir la valeur numérique du signal associée à chacun des microbolomètres de la matrice pour corriger les défauts de l'image tels que de légers décalages, un gain non uniforme, ou des pixels morts.

29. Circuit de la revendication 28, dans lequel le processeur numérique d'image comprend de plus :
un circuit de correction pour appliquer au signal de sortie, un signal électrique de correction basé sur une valeur de correction pour corriger toute non uniformité de la résistance dans chacun des microbolomètres de la matrice pour obtenir une valeur uniforme du signal de sortie.

30. Circuit de la revendication 29, comprenant de plus :
une mémoire pour stocker la valeur de correction associée à chacun des microbolomètres de la matrice.

31. Circuit de la revendication 25, dans lequel les deux impulsions de polarisation ou plus sont de magnitude sensiblement égale.

32. Circuit de la revendication 31, dans lequel les deux impulsions ou plus sont espacées dans le temps de manière sensiblement égale.

33. Circuit de la revendication 25, dans lequel les deux impulsions de polarisation ou plus sont des impulsions de tension de polarisation.

34. Circuit de la revendication 33, dans lequel les signaux résultants sont des signaux de courant.

35. Circuit de la revendication 25, dans lequel les deux impulsions de polarisation ou plus se situent dans la plage d'environ 2 à 100 impulsions de polarisation.

36. Circuit de la revendication 35, dans lequel les deux impulsions de polarisation ou plus ont une durée dans la plage d'environ 0,1 à 20 microsecondes.
